# EUROPEAN PATENT SPECIFICATION

(11) **EP 1 753 165 B1**
(45) Date of publication and mention of the grant of the patent: **11.11.2009**
(21) Application number: 05771582.3
(22) Date of filing: 26.07.2005
(51) Int. Cl.: H04W 4/06

(54) **THE METHOD OF DATA TRANSMISSION OF MULTIMEDIA BROADCAST/MULTICAST SERVICE**
DATENÜBERTRAGUNGSVERFAHREN FÜR MULTIMEDIA-BROADCAST/MULTICAST-DIENSTE
PROCEDE DE TRANSMISSION DE DONNEES DE SERVICES DE DIFFUSION/MULTI-DIFFUSION MULTIMEDIA

(30) Priority: 26.07.2004 CN 200410070799; 14.08.2004 CN 200410056142
(43) Date of publication of application: 14.02.2007
(73) Proprietor: Huawei Technologies Co., Ltd., Longgang District, Shenzhen Guangdong 518129 (CN)
(72) Inventor: ZHANG, Hai, District Shenzhen Guangdong 518129 (CN)
(74) Representative: Thun, Clemens
(86) International application number: PCT/CN2005/001125
(87) International publication number: WO 2006/010325

(56) References cited:
- WO-A-01/69951
- WO-A1-2004/002184
- WO-A1-2004/028174
- CN-A- 1 476 198
- CN-A- 1 482 777
- 3GPP: "TS23.246: Multimedia Broadcast/Multicast Service (MBMS); Architecture and functional description (Release 6) V.6.3.0" TECHNICAL SPECIFICATION, [Online] June 2004 (2004-06), pages 1-41, XP002447388 Sophia Antipolis, France Retrieved from the Internet: URL:www.3gpp.org> [retrieved on 2007-08-21]

## Description

### Field of the Invention

The invention relates to the technique of data transmission, and particularly, to a method for transmitting the data of the Multimedia Broadcast/Multicast Service.

### Background of the Invention

With development of the third generation (3G) mobile communication technology, 3G mobile communication can provide services with higher data rate than the second generation mobile communication and thus support various types of services, such as video telephone, graphic download, high-speed internet surfing, etc. And one kind of such services is characterized in transferring the service simultaneously to all its subscribers in a wireless network, e.g., weather forecast, news clips, collection of sports game, etc. Thus the concept of broadcast/multicast is introduced into 3G mobile communication.

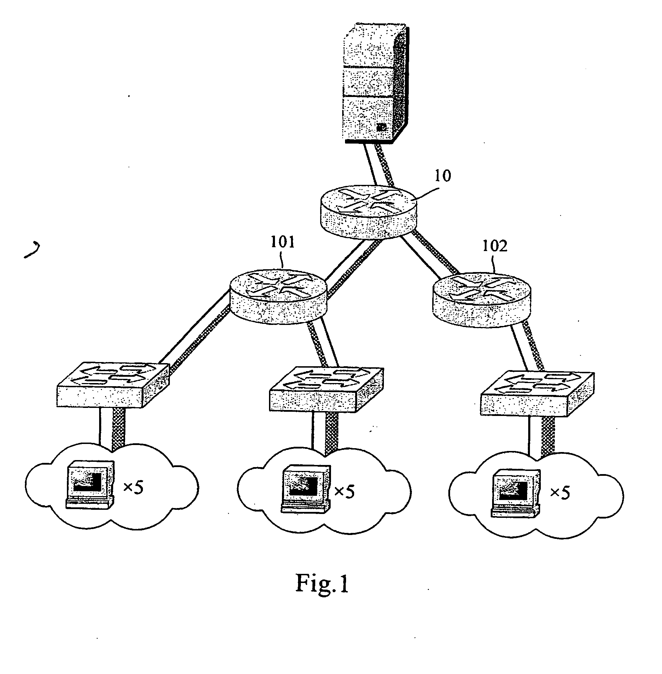

Refer to Fig. 1, for an intermediate node such as node 10, the upstream node of node 10 sends only one set of data to node 10 no matter how many downstream nodes of node 10 are expecting the data; after receiving the data, node 10 replicates them based on the number of its downstream nodes which are expecting the data, and sends a set of the data to each of these downstream nodes, for example, node 101 and 102 are the downstream nodes of node 10 and are expecting the data, therefore node 10 reproduces two sets of the received data. In this way, every branch of the data transmission tree of broadcast/multicast service transfers only one set of data and occupies only one share of transmission resources, and so does the data transmission between the root node and its corresponding downstream nodes. The difference between multicast service and broadcast service is that a multicast service provider sends corresponding information only to the subscribers of certain information while a broadcast service provider sends information to all the users in the wireless network. It can be concluded from the above description that through sending the same information to multiple users simultaneously, broadcast/multicast service can save a lot of network resources.

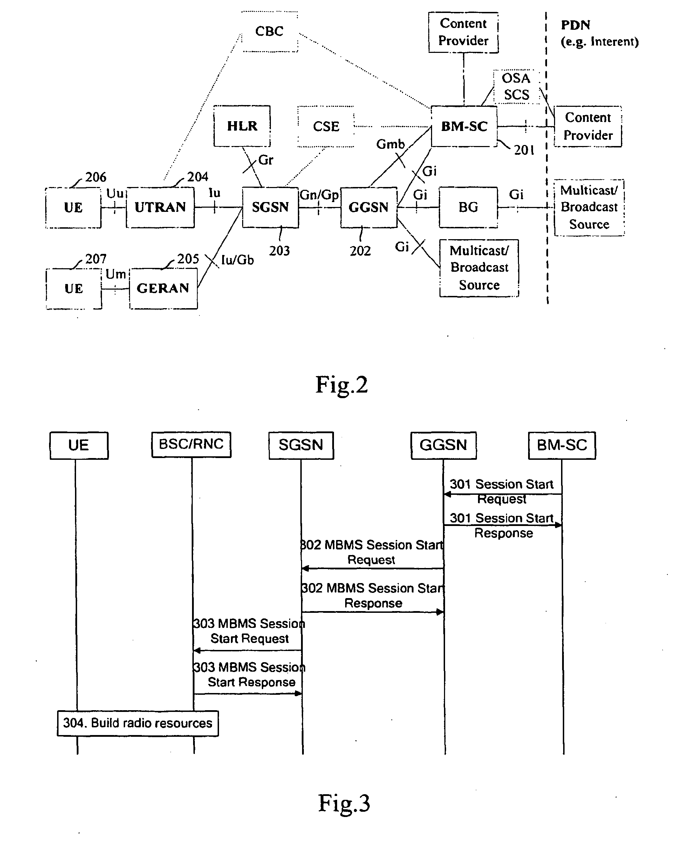

Fig. 2 is a schematic diagram illustrating the structure of a wireless network with support to broadcast/multicast service. It is shown in Fig. 2 that in the 3G Partner Project (3GPP) of the prior art, the supporting unit of broadcast/multicast service in a wireless network is the Broadcast/Multicast Service Center (BM-SC) 201, which is connected to the Traffic Plane Function (TPF) Gateway GPRS Support Node (GGSN) 202 through Gmb interface or Gi interface. A BM-SC 201 may be connected to a number of the TPF GGSNs 202, each of which is connected to one or several Serving GPRS Support Nodes (SGSN) 203 through Gn/Gp interface. The SGSN 203 is connected to the Universal Mobile Telecommunications System (UMTS) Terrestrial Radio Access Network (UTRAN) 204 through Iu interface. The UTRAN 204 is connected to the User Equipment (UE) 206 through Uu interface. The SGSN 203 may alternatively be connected to the GSM/EDGE radio access network (GERAN) 205 of the Global System for Mobile communications (GSM) through Iu/Gb interface, and then GERAN 205 is connected to the UE 207 through Um interface. Among the above nodes, the GGSNs and the SGSNs are in the Core Network (CN) of the wireless network.

In a network illustrated by Fig. 2, a user subscribes to an MBMS service through an MBMS activation process such that the network may record the user who wants to receive a certain MBMS service. Through the MBMS registration processes the network nodes set up a transmission distribution tree from the BM-SC to a Base Station Controller/Radio Network Controller (BSC/RNC) through a GGSN and an SGSN such that the properties of an MBMS session and the data thereof could be allowed to be transferred. The MBMS bearer context is built in the related nodes during the registration procedure, but bearer plane is not built.

The BM-SC triggers the MBMS Session Start Procedure when it is ready for transmitting data, then the MBMS Session Start Procedure activates all the bearer resources in the network needed for transmitting the MBMS service data and informs the interested UE of the upcoming start of the data transmission. The BM-SC provides the session attributes such as the Quality of Service (QoS) of the MBMS service, the service area of the MBMS service, and the estimated session length that may exist, to the relevant interested network nodes through the MBMS Session Start Procedure. Some operations, such as the related RNC sending session notification in the access network, counting the number of users in cells, choosing the type of radio bearer and building the radio and cabled bearer plane, are also initiated by the MBMS Session Start Procedure. The BM-SC starts the multicast data transmission after the downstream nodes complete the related operations. Each node transmits the multicast data to UE by using the bearer built in the Session Start Procedure.

As shown in Fig.3, the MBMS Session Start Procedure in the prior art comprises the following steps.

Step 301: the BM-SC sends a Session Start Request to a GGSN saved in the "downlink stream nodes list" parameter in its corresponding MBMS bearer context, which indicates that the transmission is about to start, and sets the state attribute of the MBMS bearer context as "Activate". The request includes the session attributes such as the QoS, the service area of the MBMS and the estimated session length.

Upon receiving the Session Start Request, the GGSN saves the session attributes provided in the message in the MBMS bearer context and sets the state attribute of the MBMS bearer context as "Activate", then returns a Session Start Response to the BM-SC.

Step 302: the GGSN sends the MBMS Session Start Request to the SGSN saved in the "downlink stream nodes list" parameter in its corresponding MBMS bearer context.

After receiving the MBMS Session Start Request, the SGSN saves the session attributes in the MBMS bearer context and sets the state attribute of the MBMS bearer context as "Activate", then returns an MBMS Session Start Response to the GGSN so that the GGSN sends the MBMS service data, wherein the MBMS Session Start Response provides a Tunnel Egress Identifier (TEID) used for the bearer plane.

Step 303: the SGSN sends the MBMS Session Start Request including the session attributes to each BSC/RNC connected with the SGSN itself.

After receiving the MBMS Session Start Request, the BSC/RNC determines whether it is in the MBMS service area. If the BSC/RNC is in the MBMS service area, it saves the session attributes in the MBMS bearer context and sets the state attribute of the MBMS bearer context as "Activate" first, then returns an MBMS Session Start Response to the SGSN. Otherwise, the BSC/RNC returns the MBMS Session Start Response to the SGSN directly.

In this step, if the BSC/RNC is in the MBMS service area, the MBMS Session Start Response includes the TEID which is used for the Iu bearer plane for the SGSN to send the MBMS service data. Furthermore, if a BSC/RNC receives a number of MBMS Session Start Requests with the parameters of the Iu bearer plane, the BSC/RNC returns only one successful MBMS Session Start Response used for building one Iu bearer plane reaching the SGSN.

If the BSC/RNC is not in the MBMS service area, the MBMS Session Start Response returned by the BSC/RNC to the SGSN indicates that the BSC/RNC is not in the MBMS service area.

Step 304: The BSC/RNC in the MBMS service area sets up necessary radio resources used for transmitting the MBMS service data to the interested UE.

For the MBMS broadcast service, because the information of the broadcast service is sent to all the users in the radio network, each network node does not need to perform the MBMS registration procedure. When a BM-SC is ready for sending the data, it triggers an MBMS Session Start Procedure which activates all the bearer resources needed for transmitting the MBMS service data. The BM-SC provides the session attributes such as the TMGI, the QoS, the MBMS service area and the estimated session length that may exist to the relevant interested network nodes by the MBMS Session Start Procedure. Some operations, such as building the radio and cabled bearer plane, are also initiated by the MBMS Session Start Procedure. The BM-SC starts the broadcast data transmission after the downstream nodes complete the corresponding operations. Each node transmits the broadcast data to UE by using the bearer set up in the Session Start Procedure.

The MBMS broadcast service Session Start Procedure in the prior art is basically similar to the Session Start Procedure of MBMS multicast service. Also as shown in Fig.3, the procedure comprises the following steps. Herein, Steps 301∼304 are changed to Steps 301'∼304'.

Step 301': the BM-SC sends a Session Start Request to a GGSN in the Public Land Mobile Network (PLMN), which indicates that the transmission is about to start, and sets the state attribute of the MBMS bearer context as "Activate". The request includes the session attributes such as the Temporary Mobile Group Identifier (TMGI), the QoS, and the MBMS service area.

Upon receiving the Session Start Request, the GGSN sets up an MBMS bearer context and saves the session attributes provided in the message in the MBMS bearer context, then, sets the state attribute of the MBMS bearer context as "Activate" and returns a Session Start Response to the BM-SC.

Step 302': the GGSN sends the MBMS Session Start Request to all the SGSNs connected with the GGSN.

After receiving the MBMS Session Start Request, the SGSN sets up an MBMS bearer context and saves the session attributes in the MBMS bearer context and sets the state attribute of the MBMS bearer context as "Activate", then returns an MBMS Session Start Response which provides the TEID used for the bearer plane to the GGSN so that the GGSN sends the MBMS service data.

Step 303': the SGSN sends the MBMS Session Start Request including the session attributes to each BSC/RNC connected with the SGSN.

After receiving the Session Start Request, the BSC/RNC determines whether the BSC/RNC is in the MBMS service area. If the BSC/RNC is in the MBMS service area, the BSC/RNC sets up an MBMS bearer context and saves the session attributes in the MBMS bearer context and sets the state attribute of the MBMS bearer context as "Activate" first, then returns an MBMS Session Start Response to the SGSN. Otherwise, the BSC/RNC returns an MBMS Session Start Response to the SGSN directly.

In this step, if the BSC/RNC is in the MBMS service area, the MBMS Session Start Response of the BSC/RNC includes the TEID which is used for the Iu bearer plane for the SGSN to send the MBMS service data. Furthermore, if a BSC/RNC receives a number of MBMS Session Start Requests with the parameters of the Iu bearer plane, the BSC/RNC returns only one successful MBMS Session Start Response used to build one Iu bearer plane reaching the SGSN.

If the BSC/RNC is not in the MBMS service area, the MBMS Session Start Response sent by the BSC/RNC to the SGSN indicates that the BSC/RNC is not in the MBMS service area.

Step 304': The BSC/RNC in the MBMS service area sets up necessary radio resources used for transmitting the MBMS service data to the interested UE.

As seen from the above specific procedure, the SGSN sends an MBMS Session Start Request including the session attributes to each of BSC/RNCs connected with the SGSN in the Session Start Procedure. The BSC/RNC in the MBMS service area saves the session attributes in the MBMS service context, sets the state attribute of the MBMS service context as "Activate", and then returns an MBMS Session Start Response to the SGSN. The BSC/RNC which is not in the MBMS service area returns an MBMS Session Start Response which indicates that the BSC/RNC is not in the MBMS service area to the SGSN directly.

The MBMS service area of the above MBMS service is fixed, namely, the MBMS service area of the MBMS service is unchanged.

A fixed MBMS service area goes against the use of some MBMS bearers in practice. For example, for a countrywide weather forecast service adopting the MBMS bearer transmission, a user in a city only cares about the weather of that city. Suppose that a user is in the city of Beijing, he only cares about the weather of Beijing, but when the user moves to the city of Tianjin, he will start to care about the weather of Tianjin.

If the existing method of a fixed MBMS service area is adopted, there are two solutions. One is to send a countrywide weather to countrywide users; the other is that the user moving to the city of Tianjin reapplies for the MBMS service of the weather forecast of Tianjin. Much resource are wasted in the first solution because most users only care about the weather of the local region while in the second solution, users becomes unsatisfied because the users need to reapply for the MBMS service.

Additionally, for the practical conditions of a radio network, the bearer capability of each cell is different. If a high QoS is adopted to transmit data in a large region, the data cannot be transmitted in some parts of the region as a result. But if data are transmitted with smaller bandwidth according to the need of cells with relatively low bearer capabilities, the bearer capabilities of many other cells will not be fully used and the time for sending the multicast data is prolonged.

3GPP TS 23.246 V6.3.0 describes architectural solution and functionalities for the MBMS Bearer Service. It also includes considerations on the manner in which User Services should make use of the MBMS Bearer Service described in 3GPP TS 23.246.

International patent application WO 01/69951 A1 relates to a method and system for providing information about stations of a communication system, and more particularly information of stations that are located within a defined area. A search can be triggered in a location information service for information concerning wireless stations within the defined area.

### Summary of the Invention

This invention provides a method for transmitting multimedia broadcast/multicast service data, which can enhance efficiency of the MBMS data transmission, and transmit the data of different MBMS services in different MBMS service areas while making a full use of the bearer capabilities of the cells.

This invention also provides a system for transmitting multimedia broadcast/multicast service data.

A method for transmitting Multimedia Broadcast/Multicast Service (MBMS) data, includes the following steps:
receiving, by a content provider, in a Format Instruction a Quality of Service, QoS, determined by a Broadcast/Multicast-Service Centre, BM-SC, according to an access network in which MBMS data are to be transmitted in a session from the BM-SC, and returning, by the content provider, a Session Format Acknowledgement;
receiving, by the BM-SC, the QoS in a Session Start Request sent by the content provider, wherein the QoS is used for identifying the quality of service needed in the session;
receiving, by the BM-SC, information of a MBMS Service area in the Session Start Request sent by the content provider, wherein the information of the MBMS Service area is used for identifying a covering area of the session;
providing, by the BM-SC, information of geographical area by determining an intersection between geographical information defined by the BM-SC according to the QoS and geographical information corresponding to the MBMS service area;
sending, by the BM-SC, a Session Start Request with the information of geographical area provided by the BM-SC to a Base Station Controller/Radio Network Controller, BSC/RNC, through a Gateway GPRS Support Node, GGSN, and a Serving GPRS Support Nodes, SGSN, of a core network;
receiving, by the BSC/RNC, the Session Start Request, and building, by the BSC/RNC, an Iu bearer plane between the core network and the BSC/RNC whose covering area overlaps the geographical area provided in the Session Start Request; and allocating, by the BSC/RNC, transmission resources for a data transmission of an MBMS service.

The present invention also provides a system for transmitting MBMS data, which includes: a content provider, for returning a Session Format Acknowledgement upon reception of a Format Instruction;
a Broadcast/Multicast-Service Centre, BM-SC, for sending a Session Start Request carrying information of the intersection to a Base Station Controller/Radio Network Controller, BSC/RNC, through a Gateway GPRS Support Node, GGSN, and a Serving GPRS Support Nodes, SGSN, of a core network;
the GGSN, for receiving the Session Start Request from the BM-SC, and forwarding the Session Start Request to the SGSN;
the SGSN, for receiving the Session Start Request from the GGSN, and sending the Session Start Request to the BSC/RNC;
wherein the BM-SC is configured:
to determine a Quality of Service, QoS, according to an access network in which MBMS data are to be transmitted in a session, and sending the determined QoS to the content provider through the Format Instruction;
to receive the QoS in a Session Start Request sent by a content provider, wherein the QoS is used for identifying the quality of service needed in the session;
to receive information of a MBMS Service area in the Session Start Request sent by the content provider, wherein the information of the MBMS Service area is used for identifying a covering area of the session;
to provide information of geographical area by determining an intersection between geographical information defined by the BM-SC according to the QoS and geographical information corresponding to the MBMS service area;
the BSC/RNC, for receiving the Session Start Request from the BM-SC, building, if the covering area of the BSC/RNC overlaps the geographical area provided in the Session Start Request from the BM-SC, an Iu bearer plane between the core network and the BSC/RNC.

### Brief Description of the Drawings

Fig.1 is a schematic illustrating the transmission principle of a multicast service.
Fig.2 is a schematic illustrating the architecture of a radio network supporting broadcast/multicast services.
Fig.3 is a schematic flow chart of the MBMS Session Start Procedure in the prior art.
Fig.4 is a schematic flow chart of an embodiment of the method for transmitting MBMS service data.
Fig.5 is a schematic flow chart of another embodiment of the method for transmitting MBMS service data in accordance with this invention.
Fig.6 is a schematic illustrating the network topology of an embodiment of this invention.
Fig.7 is a schematic illustrating a network topology of another embodiment of this invention.
Fig.8 is a schematic illustrating another network topology of another embodiment of this invention.

### Detailed description of preferred embodiments

Thus, this invention is implemented by that: a BM-SC sends the MBMS service area and the related information to a BSC/RNC through a GGSN and a SGSN of a core network; the BSC/RNC determines the final service area of a certain MBMS session of the MBMS service according to its own covering area of cells. Herein, before the content provider sends the MBMS service area and related information of each session the GGSN and the SGSN of the core network, the BM-SC may triggers the sending of the Session Start Request, or the third part triggers the sending, and the third part may be a content provider. When the content provider triggers the BM-SC to send information of MBMS service area, there are two cases of the content provider sending the related information of MBMS service area of a certain MBMS session to the BM-SC. One is that the content provider sends the information of MBMS service area of a certain session to the BM-SC initiatively. The other is that the content provider provides the MBMS service area and the related information as required by the BM-SC in a Format Instruction. In the following description, take the case that the content provider triggers the BM-SC to send information of MBMS service area for example. This example does not form part of the invention but represents an example useful for understanding the invention. The other manners of triggering the BM-SC to send information are similar to the manner of content provider triggering the BM-SC to send information, and the other manners are not described in detail hereinafter.

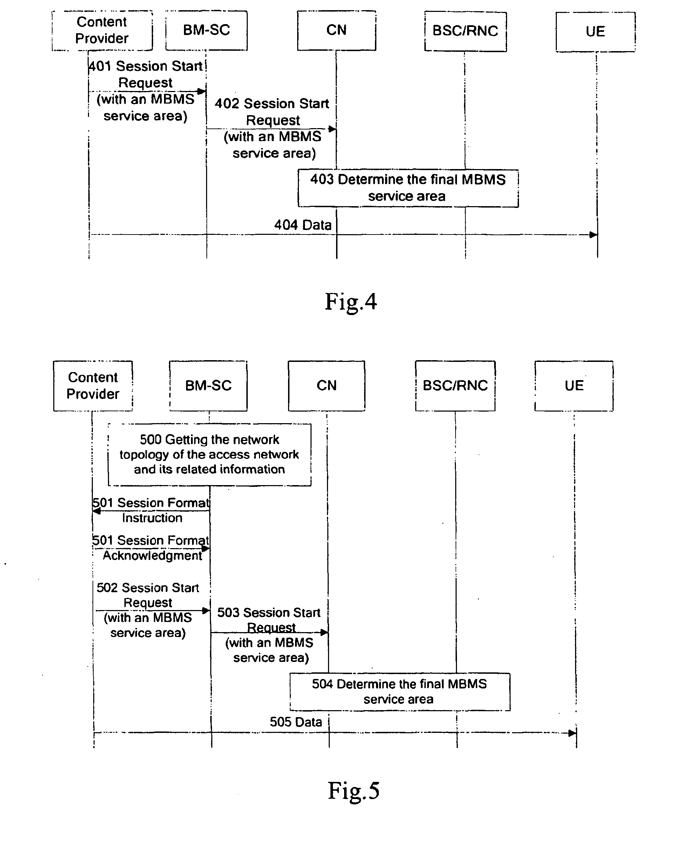

In the first case of the content provider sending the related information of MBMS service area to the BM-SC, the specific procedure of MBMS service data transmission comprises the following steps as shown in Fig.4. It should be noted that, the following steps are not part of the invention but represents an example useful for understanding the invention.

Step 401: before a session starts, a content provider sends a Session Start Request which includes parameters, such as the QoS, the MBMS service area, the expected session length and the MBMS service identifier, to a BM-SC.

The QoS is used for identifying the quality of service needed in the session and the transmission rate of sending the service data. The MBMS service area is used for identifying the covering area of the session, which can be represented by geographical information such as longitude and latitude. The parameter of MBMS service area is defined by the content provider, and is independent to each session, namely, the MBMS service area parameters of different sessions of one MBMS bearer can be different. The expected session length is used for indicating the time duration of the session. The MBMS service identifier is used for identifying the MBMS service, which can be the IP address of the multicast, or a service code assigned to the content provider by the operator. Herein, a content provider is an entity which provides a MBMS service for users.

Step 402: after receiving the Session Start Request sent by the content provider, the BM-SC sends the Session Start Request to a GGSN in the CN;
the Session Start Request includes parameters similar to the parameters in the step 401, such as the QoS, the MBMS service area, the expected session length and the MBMS service identifier.

Step 403: the GGSN in the CN then sends the Session Start Request to an SGSN, and the SGSN sends the Session Start Request to all the BSC/RNCs connected with the SGSN after receiving the message.

Each of the BSC/RNCs that receive the Session Start Request compares the MBMS service area in the request message with its own covering area to find whether there is overlap. If there is overlap, the BSC/RNC builds an Iu bearer plane between itself and the SSGN, and builds the corresponding Iub bearer, the corresponding radio bearer with the base station corresponding to the overlap area and allocates appropriate transmission resources. Otherwise, the BSC/RNC returns a Session Rejection to the SGSN without building the corresponding bearers, and terminates the current procedure of data transmission.

Herein, if there are a number of overlap cells and the transmission bearer capabilities of the cells are different, the data transmission of the current MBMS service in different areas can be performed via multiple sessions, respectively, by adopting appropriate transmission bearer capabilities of the different areas.

Step 404: the content provider provides the MBMS service data for the UE which needs the MBMS service. Specifically, the MBMS service data of this MBMS session is transmitted using the allocated corresponding resources through the built cabled and radio bearer along the nodes having build the bearer plane.

In the second case of the content provider providing the related information of MBMS service area to the BM-SC, the specific procedure of the MBMS service data transmission comprises the following steps as shown in Fig.5.

Step 500: The BM-SC gets the information of network topology corresponding to transmitting capability of the access network side according to the transmission capability of the access network, wherein the information includes not only the communication network composition of the access network, but also the information of the QoS supported by each area, including at least the transmission rate for sending service data.

Herein, there are two manners of the BM-SC getting the network topology information: a) the BSC/RNC in the access network reports the current load of each cell to the BM-SC as scheduled or in the manner required by the BM-SC. Thus, the BM-SC can acquire at any time the QoS of the MBMS service supported by the current radio network. This kind of network topology information can be called a cell bearer network topology. b) the corresponding network configuration information is saved in the BM-SC when network planning is made, wherein the configuration information includes at least the network composition of each area and the QoS which the area supports, such as the network type of an area and the transmission rate it supports, etc. This kind of network topology can be called a planned network topology.

Regarding the same QoS, the BM-SC can learn that the current radio network can support each network topology structure of different QoS from the information saved in itself by getting the intersection between the above two network topologies.

Step 501: before a session starts, the BM-SC sends to the content provider the required Session Format Instruction, which includes at least the parameters, such as the QoS required by the MBMS service data of the session, the MBMS service identifier, and the session format, wherein the QoS required in the session of the MBMS service data is determined according to the access network area in which the session will be transmitted, and the QoS includes the information such as transmission rate; the MBMS service identifier defines the MBMS service, which can be the IP address of the multicast, or a service code assigned to the content provider by the operator, the session format can define the format required in the session, such as audio, video and etc. After receiving the Session Format Instruction, the content provider returns a Session Format Acknowledgment for the corresponding Session Format Instruction. The Session Format Instruction is used for requiring the content provider to provide the MBMS session data according to this session format.

Step 502: a content provider sends a Session Start Request including parameters, such as the QoS, the MBMS service area, the expected session length and the MBMS service identifier, to a BM-SC according to the service required by the BM-SC in Step 501. The QoS herein is used for identifying the quality of service needed in the session. The MBMS service area is used for identifying the covering area of the session, which can be represented by geographical information such as longitude and latitude, and is independent to each session; namely, the MBMS service area parameters of different sessions of one MBMS can be different. The expected session length is used for indicating the time duration of the session. The MBMS service identifier is used for identifying the MBMS service, which can be the IP address of the multicast, or a service code assigned to the content provider by the operator.

Upon receiving the Session Start Request, the BM-SC gets the intersection between the geographical area defined by itself according to the QoS and the geographical area corresponding to the MBMS service area in the received Session Start Request, and determines the information of geographical area which will be eventually transmitted by the session.

Step 503-504 are the same as steps 402 and 403 in the first case of the content provider providing the related information of MBMS service area for the BM-SC.

Step 505: Upon setting up the Iu bearer plane and the resources of the Iub bearer and corresponding radio bearer, when providing the corresponding MBMS session, the content provider provides the MBMS service data for UE according to the MBMS session requirement made by the BM-SC in Step 501, and the MBMS service data are transmitted along the corresponding bearer plane set up by using the corresponding radio bearer resources.

In the above two solutions, the BM-SC may provide the GGSN with different information of MBMS service area for different sessions of one MBMS service.

In the above two solutions, the BSC/RNC determines the geographical information of the final MBMS service area according to the received information of MBMS service area and the information of its own covering area. In practice, there are two forms of information of MBMS service area in the Session Start Request when the BM-SC sends the MBMS Session Start Request. Accordingly, the corresponding contents compared by the BSC/RNC are different.
① The BM-SC transmits the obtained geographical information of the MBMS service area through the Session Start Request message, namely, the BM-SC sends the geographical information of the MBMS service area to all the BSC/RNCs connected with the SGSN through the GGSN and the SGSN. Upon receiving the Session Start Request, each BSC/RNC gets the list of overlapping cells between the geographical area of its own covering cells and the geographical area of the MBMS service area by comparing the geographical information of the MBMS service area with the corresponding geographical information of its own covering cells.
② the BM-SC sends the obtained geographical information of MBMS service area to a server storing the network configuration, and the server compares the geographical information of MBMS service area provided by the BM-SC with the covering area of the radio network, and gets the list of cells in the radio network corresponding to the provided geographical information of MBMS service area according to the corresponding relation. Then, the server returns the obtained list of cells to the BM-SC. So, when the BM-SC sends a Session Start Request to the CN in the MBMS service data transmission procedure as shown in Fig.4, the information of MBMS service area being transmitted is the list of cells obtained by the BM-SC, and the list of cells is transmitted to all the BSC/RNCs connected with the SGSN through the GGSN and the SGSN in the CN. Upon receiving the Session Start Request, each BSC/RNC still performs the comparison of the service areas, and in this case, it is to compare its own covering cells with the cells in the list of cells directly, and get the overlapping cells. Herein, the server can be an independent network entity, or a function entity inside the BM-SC.

In the second solution, because a list of cells is carried in the Session Start Request message sent by the BM-SC to the GGSN, the GGSN or the SGSN receiving the Session Start Request can determine directly whether their own covering geographical areas include the cells in the list of cells. If the GGSN or the SGSN own covering geographical areas include the cells in the list of cells, the GGSN or the SGSN continue to send the Session Start Request to the downstream nodes. If not, the GGSN or the SGSN returns a Session Rejection to their upstream nodes without building the corresponding bearer, and terminates the current data transmission procedure. Furthermore, the GGSN or the SGSN will no longer send the Session Start Request to the downstream nodes thereof.

In the above two solutions of the BM-SC sending information of MBMS service area of different forms, there are two sources from which the BM-SC gets the information of MBMS service area.

The first source, the information of MBMS service area that the BM-SC gets is the geographical information of MBMS service area that the content provider sends.

The second source, the BM-SC gets the information of MBMS service area by the following steps: the BM-SC first gets the intersection between the cell bearer topology which the BM-SC obtains currently and the planned network topology according to the QoS parameter of the same type supported by the network; then requires the content provider to send data of the corresponding session format according to the obtained intersection. After the content provider sends the Session Start Request with the information of MBMS service area to the BM-SC according to the Session Format Instruction, the BM-SC gets the intersection between the previously obtained topology intersection and the information of MBMS service area in the Session Start Request, and gets the MBMS area to be sent by the session. Then, the BM-SC sends the obtained MBMS service area to the GGSN, or the BM-SC sends the obtained MBMS service area to a server storing the network configuration. The topology intersection obtained first can be a cell bearer topology, or planned network topology, or the whole network. For example, provided that Area A includes three parts, namely, Area A1, Area A2 and Area A3, wherein Area A1 and Area A2 are the covering areas of a WCDMA network which supports a transmission bearer capability of 384kbps, Area A3 is a covering area of a GPRS network which supports a transmission bearer capability of 64kbps. According to the load of the bearers, the current available bearer capabilities of the areas are listed as the following: the current transmission bearer capability of Area A1 is 100kbps, A2 is 180∼250kbps, and A3 is 30kbps. Therefore, the BM-SC determines that Area A1 can transmit a MBMS service of 100kpbs, Area A2 200kbps, and Area A3 30kbps. So, the BM-SC asks the content provider for MBMS services of 100kbps, 200kbps and 30kbps, respectively. The content provider sends different Session Start Requests, in which the transmission rates are 100kbps, 200kbps and 30kbps and the MBMS service area is the entire Area A, according to the requirements of the BM-SC. Then, the BM-SC gets the intersection between the areas of different bearer capabilities and Area A, and determines the three areas to which the three MBMS sessions will be sent are Area A1, Area A2 and Area A3, namely, the session of 100kbps transmission rate will be transmitted in Area A1, the session of 200kbps transmission rate will be transmitted in Area A2, and the session of 30kbps transmission rate will be transmitted in Area A3.

Obviously, when the BM-SC sends an MBMS service area to the downstream nodes, it can send the geographical information of the MBMS service area directly, which is equivalent to sending a copy of geographical map to the downstream nodes. Alternatively, the BM-SC can transform the geographical information of the MBMS service area into the information of a list of cells and send the transformed geographical information to the downstream nodes.

Because both the 2G access network, GSM/EDGE Radio Access Network (GERAN) in which the entity connected with the SGSN is a BSC, and the 3G access network, Universal Terrestrial Radio Access Network (UTRAN) in which the entity connected with the SGSN is an RNC, support the MBMS simultaneously and can be connected to the existing CN in the present network topology. A 2G or 3G network identifier can be carried in a Session Start Request by a BM-SC when satisfying the demands of different network capabilities using different sessions. And the SGSN can decide to send a Session Start Request to a BSC or an RNC according to the 2G or 3G network identifier after receiving the Session Start Request. Based on this idea, this preferred embodiment can provide another solution, namely, on the basis of the two solutions of the content provider providing the related information of MBMS service area to the BM-SC, the BM-SC sends a network type identifier of access network required by a certain session to the GGSN, which indicates whether to adopt a 2G network or a 3G network. The network type identifier of access network can be determined by negotiation between the content provider and the BM-SC in advance, or determined by the content provider through negotiation according to the Session Format Instruction of the BM-SC.

Specifically, in Step 401 of the first case of the content provider providing the related information of MBMS service area to the BM-SC, besides the existing information, a Session Start Request sent by the content provider to the BM-SC further carries a network type identifier of access network used for identifying the type of the access network in which the session needs to be transmitted. Correspondingly, the BM-SC will sends the network type identifier of the access network to the GGSN and the SGSN; in Step 403, the SGSN will decide whether to send the Session Start Request to a BSC, or to an RNC, or to both of them according to the network type identifier of access network; the BSC/RNC receiving the Session Start Request continues with the subsequent operation.

In the second case of the content provider providing the related information of MBMS service area to the BM-SC, Step 500 is deleted and Step 505 keeps unchanged. The other steps are changed as the following.

Step 501': before a session starts, the BM-SC sends the required Session Format Instruction including at least the parameters, such as the QoS required by the MBMS service data of the session, the MBMS service identifier and the session format, to the content provider. The QoS required by the MBMS service data in the session is determined according to the access network in which the session needs to be transmitted, and the QoS includes such information as transmission rate; the MBMS service identifier defines the MBMS service, which can be the IP address of the multicast, or a service code assigned to the content provider by the operator; the session format can define the format required in the session, such as audio, video, etc. Upon receiving the Session Format Instruction, the content provider returns a Session Format Acknowledgment for the corresponding Session Format Instruction. The Session Format Instruction is used for requiring the content provider to provide the MBMS session data according to this session format.

When the BM-SC sends the required Session Format Instruction to the content provider, the Session Format Instruction carries the type of the network in which the session needs to be transmitted, namely a 2G network or a 3G network. According to the configuration in advance, the content provider gets the related information corresponding to the network type, such as the requirement for the QoS, the range of the supported rate, etc., then returns the obtained information of the matched corresponding network to the BM-SC.

Step 502': the content provider sends a Session Start Request which includes such parameters as the QoS, the MBMS service area, the expected session length and the MBMS service identifier to a BM-SC according to the service required by the BM-SC in Step 501'. The QoS is used for identifying the quality of service needed in the session. The MBMS service area is used for identifying the covering area of the session, which can be represented by geographical information such as longitude and latitude. The parameter of MBMS service area is independent to each session, namely, the MBMS service area parameters of different sessions of one MBMS can be different. The expected session length is used for indicating the time duration of the session. The MBMS service identifier is used for identifying the MBMS service, which can be the IP address of the multicast, or a service code assigned to the content provider by the operator. The network type identifier of access network is used for identifying the type of the access network in which the session needs to be transmitted.

Upon receiving the Session Start Request, the BM-SC gets the intersection between the geographical area defined by itself according to the QoS and the geographical area corresponding to the MBMS service area in the received Session Start Request, and determines the geographical area information which will be eventually transmitted by the session.

Step 503': after receiving the Session Start Request sent by the content provider, the BM-SC sends a Session Start Request with the network type identifier of access network to a GGSN in the CN.

Step 504': the GGSN in the CN sends the Session Start Request with the network type identifier of access network to the SGSN.

Upon receiving the message, the SGSN determines the BSC/RNC connected with the SGSN and decides which BSC/RNC in the access network to send the Session Start Request according to the network type identifier of access network. Specifically, if the network type identifier of access network indicates a 2G network, it sends the Session Start Request only to the BSC; if the network type identifier of access network indicates a 3G network, it sends the Session Start Request only to the RNC; if the network type identifier of access network indicates both a 2G network and a 3G network, it sends the Session Start Request to all the BSC/RNCs connected with itself.

Each BSC/RNC that receives the Session Start Request compares the MBMS service area in the request with its own covering area to find whether there is overlap. If there is overlap, the BSC/ RNC builds an Iu bearer plane between itself and an SSGN, builds the corresponding Iub bearer and radio bearer with the base station corresponding to the overlap area, and allocates the appropriate transmission resources. Otherwise, the BSC/RNC returns a Session Rejection to the SGSN without building the corresponding bearers, and terminates the current procedure of data transmission.

Herein, if there are a number of overlapping cells and the transmission bearer capabilities of the cells are different, the data transmission of the current MBMS service in different areas can be performed through a number of sessions, respectively, by adopting appropriate transmission bearer capabilities of the different areas.

The above decision on the network type identifier of access network can also be performed in the BSC/RNC, namely:
Step 503'': upon receiving the Session Start Request sent by the content provider, the BM-SC sends a Session Start Request with the network type identifier of access network to a GGSN in the CN.
Step 504": the GGSN in the CN sends the Session Start Request with the network type identifier of access network to an SGSN. Upon receiving the message, the SGSN sends the Session Start Request with the network type identifier of access network to all the BSC/RNCs connected with the SGSN.

Each of the BSC/RNCs which have received the Session Start Request compares the network type identifier of access network first. If the BSC/RNC does not belong to the network type of access network required in the session, the BSC/RNC does not continue the next operation and terminates the current processing procedure. Otherwise, the BSC/RNC continues to determine by comparison whether there is overlap between the MBMS service area in the request message and its own covering area. If there is overlap, the BSC/RNC builds an Iu bearer plane between itself and the SSGN, builds the corresponding Iub bearer and radio bearer with the base station corresponding to the overlap area, and allocates the corresponding transmission resources. If there is no overlap, the BSC/RNC returns a Session Rejection to the SGSN without building the corresponding bearer, and terminates the current data transmission procedure.

Herein, if there are a number of overlap cells and the transmission bearer capabilities of the cells are different, the data transmission of the current MBMS service in different areas can be performed through a number of sessions, respectively, by adopting appropriate transmission bearer capabilities of the different areas.

The following are some embodiments of the present invention, which make the advantages of the present invention more apparent.

### Embodiment 1:

This embodiment does not form part of the invention but represents an example useful for understanding the invention. In this embodiment, a content provider initiatively sends to BM-SC the information of MBMS service area of the information to be issued, and the BSC/RNC decides the final service area of the MBMS service. In this embodiment, the content provider provides an MBMS service of traffic information of a city, and the MBMS service provides the local traffic information, such as real-time traffic broadcasting, real-time pictures and explication of traffic congestion, for the users of different regions of the city. The real-time traffic broadcasting is for the users of the whole city while the real-time pictures and explications of traffic congestion are to be issued only in the regions of congestion, for only the users in the regions of congestion care about the pictures and explications.

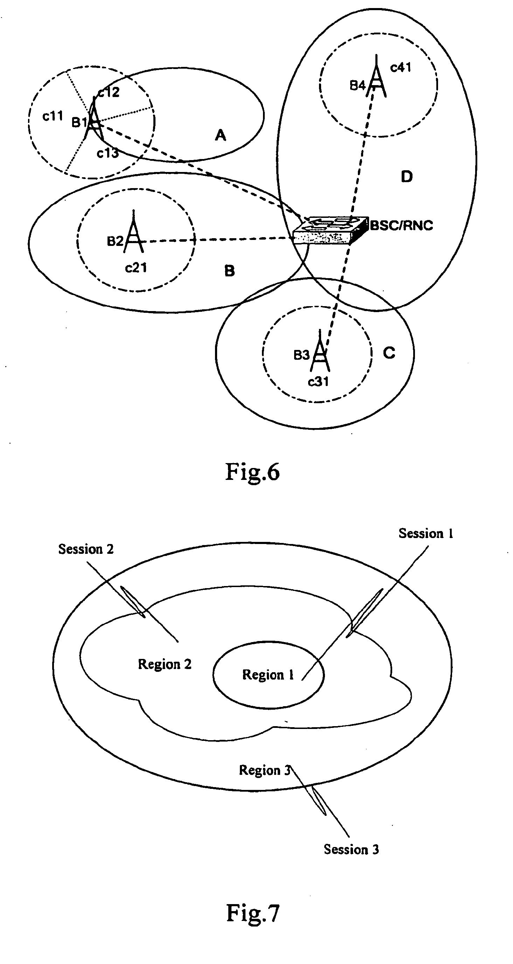

Fig. 6 is a schematic illustrating the network topology of the city in this embodiment. This embodiment further includes three application examples, all of which are as shown in Fig.6. The city has four regions, namely Region A, Region B, Region C and Region D, as shown in Fig.6. Meanwhile, there are four base stations of Node B, namely Node B1, Node B2, Node B3 and Node B4, in the city. All four Nodes B are connected with a BSC/RNC in the city. The four dash-dotted circles in Fig.6 are the covering areas of the four Nodes B, respectively, wherein the covering area of Node B1 is divided into three cells, namely c11, c12 and c13, while the covering areas of the other three Nodes B have only one cell each, namely c21, c31, c41, respectively. Thus, all the cells, c11, c12, c13, c21, c31 and c41 are the cells covered by the BSC/RNC. Cells c21, c31 and c41 are located in Region B, C, and D, respectively, and part of cells c12 and c13 are located in Region A.

In the first application example, provided that the i^{th} MBMS session of the MBMS providing the city traffic information needs to broadcast real-time pictures and explications of local traffic congestion in Region A. In this case, the MBMS service data transmission procedure for issuing the real-time pictures and explications of traffic congestion is as follows.

11) The content provider sends a Session Start Request to the BM-SC. The request carries the geographical information of Region A in which the session needs to be broadcasted, the geographical information of Region A can be a region identified with longitude and latitude, and the request also carries the service code of the MBMS service.

12) Upon receiving the Session Start Request, the BM-SC transforms the geographical information in the request into a format which can be recognized by the BSC/RNC, then sends the Session Start Request with the geographical information of Region A to the GGSN. Next, the GGSN sends the Session Start Request with the geographical information of Region A to the SGSN. After receiving the Session Start Request, the SGSN sends the Session Start Request with the geographical information of Region A to all the BSC/RNCs connected with itself.

13) Upon receiving the Session Start Request, the BSC/RNC gets the information of MBMS service area, namely the geographical information of Region A, in the request message first; then, determines whether the geographical area covered by the cells governed by the BSC/RNC includes the area indicated by the above information of MBMS service area, that is to say, the BSC/RNC determines whether there is an intersection between the six cells covered by itself and Region A. An intersection exists because parts of Cell c12 and C13 are located in Region A. Thus, the BSC/RNC builds the corresponding Iu bearer plane with the SGSN. In this embodiment, other unqualified conditions including such abnormal conditions as the Iu Flax, network failure and etc., do not exist in the default case, that is to say, apart from the absence of an intersection, no other abnormal conditions exist.

14) The BSC/RNC having built the Iu bearer plane builds the Iub bearer with the corresponding Node B and builds the radio bearer resources in the corresponding cells according to the result of the above determining.

As shown in Fig.6, among the four Nodes B covered by the BSC/RNC, there is overlap between the covering area of Cell c12 and c13 of Node B1 and Region A. Therefore, the BSC/RNC builds the Iub bearer with Node B1 in this step. The covering area of cells and the required geographical location cannot match perfectly because of the irregularity of the covering area of radio cells. So it is needed to determine a data transmission strategy, namely, transmitting the data according to a larger area, or according to a smaller area. If the strategy of transmitting the data according to a larger area is adopted, the data is transmitted in the whole cell. In this embodiment, the strategy of transmitting the data according to a larger area is adopted. So, the MBMS service is transmitted in the whole cell of Cell c13 although only part of the covering area of Cell c13 is within Region A, and the corresponding radio bearer resources are built in Cells c 12 and c13.

15) After the Iub bearer and the corresponding radio bearer resource have been built, when the content provider provides the i^{th} session, the service data are transmitted through a series of built bearers and resources. Therefore, only Node B1 can receive the MBMS service of traffic information, and then the service is transmitted in Cells c12 and c13 which Node B1 covers.

In the second application example, provided that the j^{th} MBMS session for providing the city's traffic information needs to broadcast real-time pictures and explications of local traffic congestion in Region B. In this case, the MBMS service data transmission procedure for issuing real-time pictures and explications of traffic congestion is as follows.

21) The content provider sends a Session Start Request to the BM-SC. The request carries the geographical information of Region B in which the session needs to be broadcasted, the geographical information of Region B can be a region identified with longitude and latitude, and the request also carries the service code of the MBMS service.

22∼23) The processing procedure is the same as the application example 1 except that what the request carries is the geographical information of Region B. The BSC/RNC also determines whether there is overlap between its own covering cells and Region B.

24) The BSC/RNC having built the Iu bearer plane builds the Iu bearer with the corresponding Node B and builds the radio bearer resources in the corresponding cells according to the result of the above determining. As shown in Fig.6, as the whole Cell of c21 is located in Region B, the BSC/RNC builds the Iub bearer between itself and Node B2 and builds the corresponding radio bearer resources in the Cell c21 of Node B2.

25) After the Iub bearer and the corresponding radio bearer resource have been built, the service data are transmitted through a series of the above built bearers and resources when the content provider provides the j^{th} session. In this case, only Node B2 can receive the corresponding MBMS service, then Node B2 transmits the service in Cell c21 which it covers.

In the third application example, provided that the k^{th} MBMS session for providing the city's traffic information needs to broadcast integrated traffic information of Regions A, B, C and D in these regions. Thus, according to the service data transmission procedures given in application example 1 and application example 2, the content provider sends the geographical information of Regions A, B, C and D to the BM-SC which sends the information to the BSC/RNC through the GGSN and the SGSN; next, the BSC/RNC in the access network builds the Iub bearers between itself and Node B1, B2, B3 and B4, and builds the corresponding radio bearer resources in Cell c12 of Node B1, Cell c21 of Node B2, Cell c31 of Node B3 and Cell c41 in Node B4.

After all the Iub bearers and the corresponding radio bearer resources have been built, the service data are transmitted through a series of built bearers and resources when the content provider provides the k^{th} session. In this example, Node B1, Node B2, Node B3 and Node B4 can all receive the MBMS service data, and then each of the Nodes B transmits the MBMS service data in its own cell in which the corresponding radio bearer resources have been built.

### Embodiment 2:

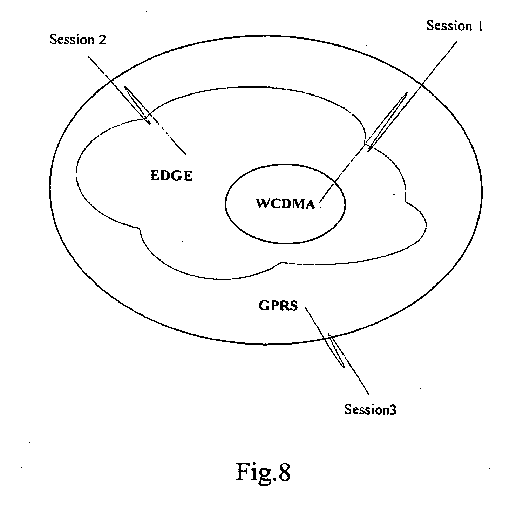

In this embodiment, the radio communication network of a city includes several conditions. Fig.7 and Fig.8 are two topology structures of the city radio communication network classified from different points of view. Fig.7 is the topology structure classified according to the busy/idle state of services. Fig.8 is the topology structure classified according to the modes which the networks support.

As shown in Fig.7, the conditions of a city's radio communication network can be classified into three types: the core area of the city, Area1, in which the bandwidth that can be used for MBMS service data transmission is 64kbps because of service congestion; the central area of the city, Area2, in which the bandwidth that can be used for MBMS service data transmission is 128kbps because of better service condition; and the marginal area of the city, Area3, in which the bandwidth that can be used for the MBMS service data transmission is 384kbps because of fewer users.

As shown in Fig.8, the city radio communication network is composed of the networks supporting three modes, namely, the WCDMA network covering the core area of the city, the GPRS network covering the suburb, and the EDGE network covering the other areas. The MBMS service data transmission rates supported by the three kinds of network are different: the WCDMA network supports a rate of 384kbps, the EDGE network supports 90kbps, and the GPRS network supports 30kbps.

In this embodiment, the BM-SC can acquire the information of the currently covering radio communication network in advance, such as the network condition, the network type and the transmission rate which the network supports. In the case as shown in Fig.7, the BSC/RNC in the access network may report the current load of each cell to the BM-SC periodically or in a manner required by the BM-SC such that the BM-SC could acquire at any time the QoS of the MBMS service, namely, the transmission rate which the current radio network can support. In the case as shown in Fig.8, the corresponding network configuration information may be saved in the BM-SC when the network planning is made such that the BM-SC could acquire the MBMS service data transmission rate which the corresponding area supports.

Specifically, this embodiment is to provide an MBMS download service in the above area, such as downloading a copy of a picture of 2MB size, and the BSC/RNC determines the final service area of the MBMS service. Then, based on the radio communication network as shown in Fig.7, there are the following application examples.

In the first application example, provided that the BM-SC needs to send the i^{th} MBMS session of the MBMS download service in the core area, Area1. Based on the comprehensive conditions of the radio network, the BM-SC needs to perform a data transmission of 64kbps in Area1. Then, the data transmission procedure for the MBMS download service is as follows.

31) The BM-SC sends a Session Format Instruction which includes such parameters as the QoS information required in the session and the MBMS service identifier to the content provider. The QoS information required in the session is used for asking the content provider to send the multicast data at a rate of 64kbps; the MBMS service identifier defines the MBMS service, which can be the IP address of the multicast, or a service code assigned to the content provider by the operator. Upon receiving the above Session Format Instruction, the content provider records the corresponding Session Format Instruction and returns a Session Format Acknowledgment to the BM-SC.

32) The content provider, according to the service required in the Session Format Instruction, sends to the BM-SC a Session Start Request, which includes such parameters as the QoS, the MBMS service area, the estimated session length and the MBMS service identifier.

The QoS indicates that the rate of the session is 64kbps;the MBMS service area is the service issuing area defined by the content provider, which, herein, is the union of the three areas, namely, Area1+Area2+Area3; the estimated session length is used for indicating the time duration of the session; and the MBMS service identifier is used for identifying the MBMS service, which can be the IP address of the multicast, or a service code assigned to the content provider by the operator.

After receiving the Session Start Request with the above parameters, the BM-SC gets the intersection between the geographical area of Area1 defined by itself and the geographical area of Area1+Area2+Area3 in the received Session Start Request, and decides Area1 as the geographical area in which this session needs to be transmitted.

33) The BM-SC transforms the obtained geographical information into a format which can be recognized by the BSC/RNC, namely, transforms the geographical information of Area1 into the format which can be recognized by the BSC/RNC, then sends the Session Start Request with the geographical information of Area1 to the GGSN. Next, the GGSN sends the Session Start Request to the SGSN. Upon receiving the Session Start Request, the SGSN sends the Session Start Request with the geographical information of Area1 which can be recognized by the BSC/RNC to all the BSC/RNCs connected with the SGSN.

34) Upon receiving the Session Start Request, the BSC/RNC gets the information of MBMS service area, namely the geographical information of Area1, in the Session Start Request first; then, determines whether the geographical area covered by its own covering cells includes the obtained area indicated by the information of MBMS service area, that is to say, the BSC/RNC determines whether the geographical area covered by its own covering cells includes Area1. If it includes Area1, the BSC/RNC builds the corresponding Iu bearer plane with the SGSN, builds the Iub bearer with the corresponding Node B and builds the radio bearer resources in the corresponding cells. In this embodiment, other unqualified conditions such as the abnormal conditions of Iu Flax and network failure, do not exist in the default case, that is to say, apart from the absence of a containing relation, no other abnormal conditions exist.

35) After the Iu bearer plane, the Iub bearer and the corresponding radio bearer resources have been built, when the content provider provides the i^{th} MBMS session, the service data are transmitted through a series of built bearers and resources at a rate of 64kbps, and transmitted only in the cells of Area1,.

In the second application example, provided that the BM-SC needs to send the j^{th} MBMS session of the MBMS download service in the central area, Area2. Based on the comprehensive conditions of the radio network, the BM-SC needs to perform a data transmission of 128kbps in Area2. Then, the MBMS service data transmission procedure for the MBMS download service is fully the same as the i^{th} MBMS session.

In the third application example, provided that the BM-SC needs to send the k^{th} MBMS session of the MBMS download service in the central area, Area3. Based on the comprehensive conditions of the radio network, the BM-SC needs to perform a data transmission of 384kbps in Area3. Then, the MBMS service data transmission procedure for the MBMS download service is also fully the same as the i^{th} MBMS session.

Provided that there are three MBMS sessions, namely i, j and k, and their transmission rates are 384kbps, 90kbps and 30kbps, respectively. As the BM-SC has saved the corresponding network configuration when network planning is made, based on the network topology as shown in Fig.8, the BM-SC needs to transmit the i^{th} MBMS session in the covering area of the WCDMA network, so the BM-SC sends a Session Format Instruction including the QoS information required by the session to the content provider, the content provider sends the multicast data at a rate of 384kbps according to the QoS information. Likewise, the BM-SC needs to transmit the j^{th} MBMS session in the covering area of the EDGE network, so the BM-SC sends to the content provider a Session Format Instruction which includes the QoS information required by the session asking the content provider to send the multicast data at a rate of 90kbps. Under the similar circumstances, the BM-SC needs to transmit the k^{th} MBMS session in the covering area of the GPRS network, so the BM-SC sends to the content provider a Session Format Instruction which includes the QoS information required by the session asking the content provider to send the multicast data at a rate of 30kbps,.

If both the conditions shown in Fig.7 and Fig.8 exist when data of an MBMS service are transmitted in a city's communications network as shown in Fig.7 or Fig.8, for example, the core area shown in Fig.8 is covered by the WCDMA network in which data of 384kbps can be transmitted, and meanwhile the area is an area of service congestion as shown in Fig.7 in which the bandwidth used for transmitting the MBMS service data is only 64kbps. In this case, it is necessary to take various conditions into consideration in a comprehensive way so as to determine the data transmission rates in the corresponding area. Usually, the data are transmitted at a smaller rate.

### Embodiment 3:

If what needs to be transmitted is a segment of news broadcast, a content provider can provide two kinds of session. One is a video+audio stream media session with a bandwidth of 128kbps and the other is an audio session with a bandwidth of 30kbps. Also as shown in Fig.7, the bandwidth which can be used for the MBMS service data transmission in Area1 is 64kbps; the bandwidth which can be used for the MBMS service data transmission in Area2 is 128kbps; and the bandwidth which can be used for the MBMS service data transmission in Area3 is 384kbps;

Then, the BM-SC needs to transmit the i^{th} MBMS session of the MBMS service for transmitting the news broadcast in Area1. Based on the current condition of the radio network, the BM-SC will perform an audio session transmission of 30kbps in Area1, and the specific procedure is as follows.

41) The BM-SC sends to the content provider a Session Format Instruction, which instructs the content provider to provide an audio session of 30kbps. Upon receiving the Session Format Instruction, the content provider returns a corresponding Session Format Acknowledgment.

42)∼44) are fully the same as the steps 32)∼34) in Embodiment 2.

45) After the Iu bearer plane, the Iub bearer and the corresponding radio bearer resources have been built, when the content provider provides the i^{th} MBMS session which is an audio session of a rate of 30kbps, the service data are transmitted through a series of built bearers and resources and are transmitted only in the cells of Area1.

Similarly, the BM-SC needs to transmit the j^{th} MBMS session of the MBMS service for transmitting the news broadcast in Area2 and Area3. Based on the current conditions of the radio network, the BM-SC will perform a video+audio session transmission of 128kbps in Area2 and Area3, and the transmission procedure is fully the same as the steps 41)∼45) of the i^{th} session.

After the Iu bearer plane, the Iub bearer and the corresponding radio bearer resources have been built, when the content provider provides the j^{th} MBMS session which is a video+audio session of a rate of 128kbps, the service data are transmitted through a series of built bearers and resources, and are transmitted only in the cells of Area1 and Area2.

It is necessary to note that the case that BM-SC trigger the Session Start Request is also adaptive to the implementing manner of the above-mentioned embodiments, and when BM-SC trigger the Session Start Request by itself, the information of MBMS service area is stored in the BM-SC, and the other procedures is same to the above-mentioned procedures.

The embodiment of the present invention also provides a system for implementing the above-mentioned method, which includes a BM-SC, a GGSN, a SGSN, BSC/RNC.

The foregoing descriptions are only preferred embodiments of this invention and are not for use in limiting the protection scope thereof. Any changes and modifications can be made by those skilled in the art without departing from this invention and therefore should be covered within the protection scope as set by the appended claims.

## Claims

1. A method for transmitting Multimedia Broadcast/Multicast Service MBMS data, comprising:
receiving, by a content provider, in a Format Instruction a Quality of Service, QoS, determined by a Broadcast/Multicast-Service Centre, BM-SC, according to an access network in which MBMS data are to be transmitted in a session from the BM-SC (501), and returning, by the content provider, a Session Format Acknowledgement;
receiving, by the BM-SC, the QoS in a Session Start Request sent by the content provider, wherein the QoS is used for identifying the quality of service needed in the session (502);
receiving, by the BM-SC, information of a MBMS Service area in the Session Start Request sent by the content provider, wherein the information of the MBMS Service area is used for identifying a covering area of the session (502);
providing, by the BM-SC, information of geographical area by determining an intersection between geographical information defined by the BM-SC according to the QoS and geographical information corresponding to the MBMS service area;
sending, by the BM-SC, a Session Start Request with the information of geographical area provided by the BM-SC to a Base Station Controller/Radio Network Controller, BSC/RNC, through a Gateway GPRS Support Node, GGSN, and a Serving GPRS Support Node, SGSN, of a core network (503);
receiving, by the BSC/RNC, the Session Start Request, and building, by the BSC/RNC, an lu bearer plane between the core network and the BSC/RNC whose covering area overlaps the geographical area provided in the Session Start Request (504); and allocating, by the BSC/RNC, transmission resources for a data transmission of a MBMS service (505).

2. The method of Claim 1, wherein the information of the geographical area provided by the BM-SC is a list of cells covered by the geographical area; and before the sending the Session Start Request carrying the information of the geographical area to the BSC/RNC by the BM-SC, the method further comprises:
providing, by the BM-SC, information of the geographical area to a server storing network configuration; comparing, by the server, the information of the geographical area with a covering area of a radio network to obtain the list of cells; returning the list of cells to the BM-SC; and
after receiving the Session Start Request from the BM-SCdetermining, by the BSC/RNC, whether a cell of the BSC/RNC has an overlap with the cells in the list of cells in the Session Start Request.

3. The method of Claim 2, further comprising:
upon receiving the Session Start Request with the list of cells, determining by the SGSN whether a covering area of itself contain a cell in the list of cells, if containing, sending the Session Start Request to the BSC/RNC.

4. The method of Claim 1, wherein the information of the geographical area is geographical information of the geographical area; and
after the BSC/RNC receives the Session Start Request from the BM-SC, the method further comprises: comparing, by the BSC/RNC, the geographical information of the geographical area with geographical information of a cell belonging to the BSC/RNC, and determining whether the covering area of the BSC/RNC overlaps the geographical area according to a compared result.

5. The method of Claim 1, wherein the Session Format Instruction comprises at least one of the following: an MBMS service identifier, QoS of service data of the MBMS session, session format information.

6. The method of Claim 1, further comprising:
before sending the Session Format Instruction to the content provider, obtaining, by the BM-SC, the transmission capability of the geographical area.

7. The method of Claim 6, wherein the obtaining the transmission capability of the geographical area comprises: reporting, by the BSC/RNC, current load condition of each cell of the BSC/RNC to the BM-SC periodically or in a manner required by the BM-SC, and obtaining, by the BM-SC, the transmission capability of the geographical area according to the current load condition reported; or
obtaining, by the BM-SC, the transmission capability of the geographical area according to network configuration information stored in the BM-SC during network planning; or
calculating, by the BM-SC, an intersection between the transmission capability obtained according to the current load condition and the transmission capability obtained according to the network configuration information, and taking the intersection as the transmission capability of the geographical area.

8. The method of Claim 1, wherein the Session Start Request carrying the information of the geographical areasent by the BM-SC further bears a network type identifier of an access network; and
the sending the Session Start Request carrying information of the geographical area to a BSC/RNC through a GGSN and a SGSN further comprises: the SGSN sending the Session Start Request to a network entity according to the network type identifier of the access network.

9. The method of Claim 8, wherein the SGSN sending the Session Start Request to a network entity according to the network type identifier of the access network comprises:
determining, by the SGSN, the network type identifier of the access network in the Session Start Request, if the network type identifier of the access network indicates a 2G network, sending, by the SGSN, the Session Start Request to the BSC connected with the SGSN; if the network type identifier of access network indicates a 3G network, sending, by the SGSN, the Session Start Request to the RNC connected with the SGSN; if the network type identifier of access network indicates a 2G network and a 3G network, sending, by the SGSN, the Session Start Request to the BSC and RNC connected with the SGSN.

10. The method of Claim 9, further comprising:
after receiving the Session Start Request, determining, by the BSC/RNC, whether the BSC/RNC belongs to the access network indicated by the network type identifier.

11. A system for transmitting Multimedia Broadcast/Multicast Service MBMS data, **characterized by**, comprising:
a content provider, for returning a Session Format Acknowledgement upon reception of a Format Instruction;
a Broadcast/Multicast-Service Centre, BM-SC, for sending a Session Start Request to a Base Station Controller/Radio Network Controller, BSC/RNC, through a Gateway GPRS Support Node, GGSN, and a Serving GPRS Support Node, SGSN, of a core network;
the GGSN, for receiving the Session Start Request from the BM-SC, and forwarding the Session Start Request to the SGSN;
the SGSN, for receiving the Session Start Request from the GGSN, and sending the Session Start Request to the BSC/RNC;
wherein the BM-SC is configured:
to determine a Quality of Service, QoS, according to an access network in which MBMS data are to be transmitted in a session, and sending the determined QoS to the content provider through the Format Instruction;
to receive the QoS in a Session Start Request sent by the content provider, wherein the QoS is used for identifying the quality of service needed in the session;
to receive information of a MBMS Service area in the Session Start Request sent by the content provider, wherein the information of the MBMS Service area is used for identifying a covering area of the session;
to provide information of geographical area by determining an intersection between geographical information defined by the BM-SC according to the QoS and geographical information corresponding to the MBMS service area;
the BSC/RNC, for
receiving the Session Start Request from the BM-SC, building, if the covering area of the BSC/RNC overlaps the geographical area provided in the Session Start Request from the BM-SC, an Iu bearer plane between the core network and the BSC/RNC; and
allocating transmission resources for a data transmission of a MBMS service if the covering area of the BSC/RNC overlaps the geographical area provided by the BM-SC.

12. The system of Claim 11, wherein the BM-SC is further configured to obtain a network type identifier of an access network, and send the network type identifier of the access network to the BSC/RNC through the GGSN and the SGSN of the core network through the Session Start Request;
the BSC/RNC is further configured to determine whether the BSC/RNC belongs to the access network indicated by the network type identifier.

13. The system of Claim 12, wherein the SGSN is further configured to determine the network type identifier of the access network in the Session Start Request, send the Session Start Request to the BSC connected with the SGSN if the network type identifier of access network indicates a 2G network; send the Session Start Request to the RNC connected with the SGSN if the network type identifier of access network indicates a 3G network; and send the Session Start Request to the BSC and RNC connected with the SGSN if the network type identifier of access network indicates a 2G network and a 3G network.

14. The system of Claim 11, further comprising:
a server, for storing network configuration information, receiving the information of the intersection from the BM-SC; and comparing information of the geographical area with a covering area of a radio network to obtain a list of cells corresponding to the information of the geographical area; and returning the list of cells the BM-SC;
the BM-SC is further configured to send the list of cells corresponding to the information of the geographical area to the BSC/RNC;
the BSC/RNC is further configured to build the Iu bearer plane, and allocate transmission resources according to the list of cells corresponding to the information of the geographical area and information of the covering area of the BSC/RNC.

15. The system of Claim 11, wherein the BSC/RNC is further configured to report current load condition of each cell of the BSC/RNC to the BM-SC periodically or in a manner required by the BM-SC, and
the BM-SC is further configured to obtain the transmission capability of the geographical area according to the current load condition reported and/or network configuration information stored in the BM-SC during network planning.

## Patentansprüche

1. Verfahren zur Übertragung von Multimedia Broadcast/Multicast-Service-Daten, MBMS-Daten, umfassend:
in einer Format-Instruktion durch einen Inhalte-Anbieter Empfangen einer Service-Qualität, QoS, die durch ein Broadcast/Multicast-Servicecenter, BM-SC, gemäß einem Zugriffsnetzwerk bestimmt wird, in dem MBMS-Daten in einer Session von dem BM-SC übertragen werden sollen (501), und Zurücksenden einer Session-Format-Bestätigung durch den Inhalte-Anbieter;
Empfangen der QoS durch den BM-SC in einer Session-Start-Anfrage, die von dem Inhalte-Anbieter gesendet wird, wobei die QoS verwendet wird, um die in der Session benötigte Service-Qualität zu identifizieren (502);
Empfangen einer Information eines MBMS-Servicebereichs durch den BM-SC in der Session-Start-Anfrage, die von dem Inhalte-Anbieter gesendet wird, wobei die Information des MBMS-Servicebereichs verwendet wird, um einen Bereich der Session, der abgedeckt wird, zu identifizieren (502);
Bereitstellen von Information über einen geographischen Bereich durch den BM-SC, indem ein Überlappungsbereich zwischen der geographischen Information, die durch den BM-SC gemäß der QoS definiert wird, und der geographischen Information, die dem MBMS-Servicebereich entspricht, bestimmt wird;
Senden einer Session-Start-Anfrage durch den BM-SC mit der Information über den geographischen Bereich, der durch den BM-SC bereitgestellt wird, an einen Basisstations-Controller/Funknetz-Controller, BSC/RNC, durch einen Gateway-GPRS-Support-Knoten, GGSN, und einen Serving-GPRS-Support-Knoten, SGSN, eines Kernnetzes (503);
Empfangen der Session-Start-Anfrage durch den BSC/RNC, und durch den BSC/RNC Aufbauen einer Iu-Trägerebene zwischen dem Kernnetz und dem BSC/RNC, dessen Abdeckungsbereich den geographischen Bereich, der in der Session-Start-Anfrage bereitgestellt wird, überlappt (504); und Zuteilen von Übertragungsressourcen durch den BSC/RNC für eine Datenübertragung eines MBMS-Services (505).

2. Verfahren nach Anspruch 1, wobei die Information des geographischen Bereichs, die durch das BM-SC bereitgestellt wird, eine Liste von Zellen ist, die durch den geographischen Bereich abgedeckt werden; und vor dem Senden der Session-Start-Anfrage, die die Information des geographischen Bereichs transportiert, von dem BM-SC an den BSC/RNC, umfasst das Verfahren ferner:
von dem BM-SC Bereitstellen der Information des geographischen Bereichs an einen Server, der eine Netzwerkkonfiguration speichert; Vergleichen durch den Server der Information des geographischen Bereichs mit einem Abdeckungsbereich eines Funknetzes, um die Liste der Zellen zu erhalten; Zurücksenden der Liste der Zellen an das BM-SC; und
nach dem Empfangen der Session-Start-Anfrage von dem BM-SC, Bestimmen durch das BSC/RNC, ob eine Zelle des BSC/RNC eine Überlappung mit den Zellen in der Liste der Zellen in der Session-Start-Anfrage aufweist.

3. Verfahren nach Anspruch 2, ferner umfassend:
nach dem Empfangen der Session-Start-Anfrage mit der Liste der Zellen, Bestimmen durch den SGSN, ob ein Abdeckungsbereich des SGSN eine Zelle in der Liste der Zellen enthält, falls er eine enthält, Senden der Session-Start-Anfrage an das BSC/RNC.

4. Verfahren nach Anspruch 1, wobei die Information des geographischen Bereichs eine geographische Information des geographischen Bereichs ist; und
nachdem das BSC/RNC die Session-Start-Anfrage von dem BM-SC empfängt, das Verfahren ferner umfasst: Vergleichen durch das BSC/RNC der geographischen Information des geographischen Bereichs mit einer geographischen Information einer Zelle, die zu dem BM-SC gehört, und Bestimmen, ob der Abdeckungsbereich des BSC/RNC den geographischen Bereich entsprechend einem Vergleichsergebnis überlappt.

5. Verfahren nach Anspruch 1, wobei die Session-Format-Instruktion zumindest eins der folgenden umfasst: einen MBMS-Service-Identifzierer, eine QoS von Servicedaten der MBMS-Session, eine Session-Format-Information.

6. Verfahren nach Anspruch 1, ferner umfassend:
vor dem Senden der Session-Format-Instruktion an den Inhalte-Anbieter, Erhalten durch das BM-SC der Übertragungsleistungsfähigkeit des geographischen Bereichs.

7. Verfahren nach Anspruch 6, wobei das Erhalten der Übertragungsleistungsfähigkeit des geographischen Bereichs umfasst: durch das BSC/RNC periodisch oder in einer Weise nach Anforderung durch das BM-SC Melden einer aktuellen Belastungsbedingung von jeder Zelle des BSC/RNC an das BM-SC, und durch das BM-SC Erhalten der Übertragungsleistungsfähigkeit des geographischen Bereichs entsprechend der gemeldeten aktuellen Belastungsbedingung; oder
durch das BM-SC Erhalten der Übertragungsleistungsfähigkeit des geographischen Bereichs entsprechend der gespeicherten Netzwerkkonfigurationsinformation, die in dem BM-SC während der Netzplanung gespeichert wird; oder
durch das BM-SC Berechnen eines Überlappungsbereichs zwischen der Übertragungsleistungsfähigkeit, die entsprechend der aktuellen Belastungsbedingung erhalten wird, und der Übertragungsleistungsfähigkeit, die entsprechend der Netzwerkkonfigurationsinformation erhalten wird, und Übernehmen des Überlappungsbereichs als die Übertragungsleistungsfähigkeit des geographischen Bereichs.

8. Verfahren nach Anspruch 1, wobei die Session-Start-Anfrage, die die Information des geographischen Bereichs überträgt, die von dem BM-SC gesendet wurde, ferner einen Netzwerk-Typ-Identifizierer eines Zugriffsnetzwerks trägt; und
das Senden der Session-Start-Anfrage, die die Information des geographischen Bereichs an einen BSC/RNC über einen GGSN und einen SGSN überträgt, ferner umfasst: Senden der Session-Start-Anfrage durch den SGSN an eine Netzwerkeinheit entsprechend dem Netzwerk-Typ-Identifizierer des Zugriffsnetzwerks.

9. Verfahren nach Anspruch 8, wobei das Senden der Session-Start-Anfrage durch den SGSN an eine Netzwerkeinheit entsprechend dem Netzwerk-Typ-Identifizierer des Zugriffsnetzwerks umfasst:
Bestimmen durch den SGSN des Netzwerk-Typ-Identifizierers des Zugriffsnetzwerks in der Session-Start-Anfrage, ob der Netzwerk-Typ-Identifizierer des Zugriffsnetzwerks ein 2G-Netzwerk anzeigt, Senden der Session-Start-Anfrage durch den SGSN an das BSC, das mit dem SGSN verbunden ist; falls der Netzwerk-Typ-Identifizierer des Zugriffsnetzwerks ein 3G-Netzwerk anzeigt, Senden der Session-Start-Anfrage durch den SGSN an das RNC, das mit dem SGSN verbunden ist; falls der Netzwerk-Typ-Identifizierer des Zugriffsnetzwerks ein 2G-Netzwerk und ein 3G-Netzwerk anzeigt, Senden der Session-Start-Anfrage durch den SGSN an das BSC und das RNC, die mit dem SGSN verbunden sind.

10. Verfahren nach Anspruch 9, ferner umfassend:
nach dem Empfangen der Session-Start-Anfrage, Bestimmen durch das BSC/RNC, ob das BSC/RNC zu dem Zugriffsnetzwerk gehört, das durch den Netzwerk-Typ-Identifizierer angezeigt wird.

11. System zum Übertragen von Multimedia Broadcast/Multicast-Service-Daten, MBMS-Daten, **dadurch gekennzeichnet, dass** es umfasst:
einen Inhalte-Anbieter, um eine Session-Format-Bestätigung nach Empfang einer Format- Instruktion zurückzusenden;
ein Broadcast/Multicast-Service-Center, BM-SC, um eine Session-Start-Anfrage an einen Basisstations-Controller/Funknetz-Controller, BSC/RNC, über einen Gateway-GPRS-Support-Knoten, GGSN, und einen Serving-GPRS-Support-Knoten, SGSN, eines Kernnetzes zu senden;
den GGSN, um die Session-Start-Anfrage von dem BM-SC zu empfangen und die Session-Start-Anfrage an den SGSN weiterzuleiten;
den SGSN, um die Session-Start-Anfrage von dem GGSN zu empfangen und die Session-Start-Anfrage an das BSC/RNC zu senden;
wobei das BM-SC konfiguriert ist:
um eine Service-Qualität, QoS, gemäß einem Zugriffsnetzwerk zu bestimmen, in dem die MBMS-Daten in einer Session übertragen werden sollen, und die bestimmte QoS an den Inhalte-Anbieter durch die Format-Instruktion zu senden; um die QoS in einer Session-Start-Anfrage, die von dem Inhalte-Anbieter gesendet wird, zu empfangen, wobei die QoS verwendet wird, um die in der Session benötigte Service-Qualität zu identifizieren;
um eine Information eines MBMS-Servicebereichs in der Session-Start-Anfrage, die von dem Inhalte-Anbieter gesendet wird, zu empfangen, wobei die Information des MBMS-Servicebereichs verwendet wird, um einen Abdeckungsbereich der Session zu identifizieren;
um eine Information eines geographischen Bereichs bereitzustellen, indem ein Überlappungsbereich zwischen dem geographischen Bereich, der von dem BM-SC entsprechend der QoS definiert wird, und der geographischen Information, die dem MBMS-Servicebereich entspricht, bestimmt wird;
das BSC/RNC, um
die Session-Start-Anfrage von dem BM-SC zu empfangen, eine Iu-Trägerebene zwischen dem Kernnetz und dem BSC/RNC aufzubauen, falls der Abdeckungsbereich des BSC/RNC den geographischen Bereich überlappt, der in der Session-Start-Anfrage von dem BM-SC bereitgestellt wird; und
um Übertragungsressourcen für eine Datenübertragung eines MBMS-Services zuzuteilen, falls der Abdeckungsbereich des BSC/RNC den geographischen Bereich überlappt, der von dem BM-SC bereitgestellt wird.

12. System nach Anspruch 11, wobei das BM-SC ferner konfiguriert ist, um einen Netzwerk-Typ-Identifizierer eines Zugriffsnetzwerks zu erhalten, und den Netzwerk-Typ-Identifizierer des Zugriffsnetzwerks durch die Session-Start-Anfrage an das BSC/RNC über den GGSN und den SGSN des Kernnetzes zu senden;
das BSC/RNC ferner konfiguriert ist, zu bestimmen, ob das BSC/RNC zu dem Zugriffsnetzwerk gehört, das durch den Netzwerk-Typ-Identifizierer angezeigt wird.

13. System nach Anspruch 12, wobei der SGSN ferner konfiguriert ist, um den Netzwerk-Typ-Identifizierer des Zugriffsnetzwerks in der Session-Start-Anfrage zu bestimmen, die Session-Start-Anfrage an das BSC zu senden, das mit dem SGSN verbunden ist, falls der Netzwerk-Typ-Identifizierer des Zugriffsnetzwerks ein 2G-Netzwerk anzeigt; die Session-Start-Anfrage an das RNC zu senden, das mit dem SGSN verbunden ist, falls der Netzwerk-Typ-Identifizierer des Zugriffsnetzwerks ein 3G-Netzwerk anzeigt; und die Session-Start-Anfrage an das BSC und das RNC zu senden, die mit dem SGSN verbunden sind, falls der Netzwerk-Typ-Identifizierer des Zugriffsnetzwerks ein 2G-Netzwerk und ein 3G-Netzwerk anzeigt.

14. System nach Anspruch 11, ferner umfassend:
einen Server, um eine Netzwerk-Konfigurationsinformation zu speichern, die Information über den Überlappungsbereich von dem BM-SC zu empfangen; und
eine Information des geographischen Bereichs mit einem Abdeckungsbereich eines Funknetzes zu vergleichen, um eine Liste von Zellen zu erhalten, die mit der Information des geographischen Bereichs korrespondiert; und die Liste der Zellen an das BM-SC zurückzusenden;
wobei das BM-SC ferner konfiguriert ist, um eine Liste der Zellen an das BSC/RNC zu senden, die mit der Information des geographischen Bereichs korrespondiert;
wobei das BSC/RNC ferner konfiguriert ist, um die Iu-Trägerebene aufzubauen, und Übertragungsressourcen gemäß der Liste der Zellen zuzuteilen, die mit der Information des geographischen Bereichs und einer Information des Abdeckungsbereichs des BSC/RNC korrespondieren.

15. System nach Anspruch 11, wobei das BSC/RNC ferner konfiguriert ist, um eine aktuelle Belastungsbedingung von jeder Zelle des BSC/RNC an das BM-SC periodisch oder in einer von dem BM-SC geforderten Weise zu melden, und das BM-SC ferner konfiguriert ist, um die Übertragungsleistungsfähigkeit des geographischen Bereichs entsprechend der gemeldeten aktuellen Belastungsbedingung und/oder der Netzwerk-Konfigurationsinformation zu erhalten, die in dem BM-SC während der Netzplanung gespeichert wird.

## Revendications

1. Procédé destiné à transmettre des données de service de multidiffusion / diffusion multimédia, MBMS, comprenant les étapes ci-dessous consistant à:
recevoir, par le biais d'un fournisseur de contenu, dans une instruction de format, une qualité de service, QoS, déterminée par un centre de service de multidiffusion / diffusion générale, BM-SC, selon un réseau d'accès dans lequel des données de service MBMS doivent être transmises dans une session à partir du centre de service BM-SC (501), et renvoyer, par le biais du fournisseur de contenu, un accusé de réception de format de session;
recevoir, par le biais du centre de service BM-SC, la qualité QoS, dans une demande d'ouverture de session envoyée par le fournisseur de contenu, dans lequel la qualité QoS est utilisée pour identifier la qualité de service nécessaire à la session (502);
recevoir, par le biais du centre de service BM-SC, des informations d'une zone de service MBMS dans la demande d'ouverture de session envoyée par le fournisseur de contenu, dans lequel les informations de la zone de service MBMS sont utilisées pour identifier une zone de couverture de la session (502);
fournir, par le biais du centre de service BM-SC, les informations de zone géographique en déterminant une intersection entre des informations géographiques définies par le biais du centre de service BM-SC selon la qualité QoS et des informations géographiques correspondant à la zone de service MBMS;
envoyer, par le biais du centre de service BM-SC, une demande d'ouverture de session avec les informations de zone géographique fournies par le centre de service BM-SC à un contrôleur de station de base / contrôleur de réseau radio, BSC / RNC, via un noeud de service GPRS de transit, GGSN, et un noeud de support GPRS de service, SGSN, d'un réseau fédérateur (503);
recevoir, par le biais du contrôleur BSC / RNC, la demande d'ouverture de session, et fabriquer, par le biais du contrôleur BSC / RNC, un plan de porteuse Iu entre le réseau fédérateur et le contrôleur BSC / RNC dont la zone de couverture chevauche la zone géographique fournie dans la demande d'ouverture de session (504); et affecter, par le biais du contrôleur BSC / RNC, des ressources de transmission destinées à une transmission de données d'un service MBMS (505).

2. Procédé selon la revendication 1, dans lequel les informations de la zone géographique fournies par le biais du centre de service BM-SC représentent une liste de cellules couvertes par la zone géographique; et avant l'envoi de la demande d'ouverture de session transportant les informations de la zone géographique au contrôleur BSC / RNC par le biais du centre de service BM-SC, le procédé comprend en outre les étapes ci-dessous consistant à:
fournir, par le biais du centre de service BM-SC, des informations de la zone géographique à un serveur stockant une configuration de réseau; comparer, par le biais du serveur, les informations de la zone géographique à une zone de couverture d'un réseau radio pour obtenir la liste de cellules; renvoyer la liste de cellules au centre de service BM-SC; et
suite à la réception de la demande d'ouverture de session du centre de service BM-SC, déterminer, par le biais du contrôleur BSC / RNC, si une cellule du contrôleur BSC / RNC présente un chevauchement avec les cellules dans la liste de cellules dans la demande d'ouverture de session.

3. Procédé selon la revendication 2, comprenant en outre les étapes ci-dessous consistant à:
lors de la réception de la demande d'ouverture de session avec la liste de cellules, déterminer par le biais du noeud SGSN si une zone de couverture de ce noeud contient une cellule de la liste de cellules, le cas échéant, envoyer la demande d'ouverture de session au contrôleur BSC / RNC.

4. Procédé selon la revendication 1, dans lequel les informations de la zone géographique sont des informations géographiques de la zone géographique; et
suite à la réception, par le contrôleur BSC / RNC, de la demande d'ouverture de session en provenance du centre de service BM-SC, le procédé comporte en outre les étapes ci-après consistant à: comparer, par le biais du contrôleur BSC / RNC, les informations géographiques de la zone géographique à des informations géographiques d'une cellule appartenant au contrôleur BSC / RNC, et déterminer si la zone de couverture du contrôleur BSC / RNC chevauche la zone géographique selon un résultat comparé.

5. Procédé selon la revendication 1, dans lequel l'instruction de format de session comporte au moins l'un des éléments suivants: un identifiant de service MBMS, une qualité QoS de données de service de la session de service MBMS, des informations de format de session.

6. Procédé selon la revendication 1, comprenant en outre l'étape ci-dessous consistant à:
avant l'envoi de l'instruction de format de session au fournisseur de contenu, obtenir, par le biais du centre de service BM-SC, la capacité de transmission de la zone géographique.

7. Procédé selon la revendication 6, dans lequel l'obtention de la capacité de transmission de la zone géographique comporte les étapes ci-dessous consistant à: indiquer sous la forme d'un rapport, par le biais du contrôleur BSC / RNC, un état de charge en cours de chaque cellule du contrôleur BSC / RNC au centre de service BM-SC périodiquement ou d'une manière requise par le centre de service BM-SC, et obtenir, par le biais du centre de service BM-SC, la capacité de transmission de la zone géographique selon l'état de charge en cours indiqué; ou
obtenir, par le biais du centre de service BM-SC, la capacité de transmission de la zone géographique selon des informations de configuration de réseau stockées dans le centre de service BM-SC au cours de la planification de réseau; ou
calculer, par le biais du centre de service BM-SC, une intersection entre la capacité de transmission obtenue selon l'état de charge en cours et la capacité de transmission obtenue selon les informations de configuration de réseau, et utiliser l'intersection en qualité de capacité de transmission de la zone géographique.

8. Procédé selon la revendication 1, dans lequel la demande d'ouverture de session transportant les informations de la zone géographique envoyées par le biais du centre de service BM-SC transporte en outre un identifiant de type de réseau d'un réseau d'accès; et
l'envoi de la demande d'ouverture de session transportant les informations de la zone géographique à un contrôleur BSC / RNC par le biais d'un noeud GGSN et d'un noeud SGSN comporte en outre l'étape ci-après dans laquelle: le noeud SGSN envoie la demande d'ouverture de session à une entité de réseau selon l'identifiant de type de réseau du réseau d'accès.

9. Procédé selon la revendication 8, dans lequel l'envoi, par le noeud SGSN, de la demande d'ouverture de session à une entité de réseau selon l'identifiant de type de réseau du réseau d'accès, comprend les étapes ci-dessous consistant à:
déterminer, par le biais du noeud SGSN, l'identifiant de type de réseau du réseau d'accès dans la demande d'ouverture de session, si l'identifiant de type de réseau du réseau d'accès indique un réseau 2G, envoyer, par le biais du noeud SGSN, la demande d'ouverture de session au contrôleur BSC connecté au noeud SGSN, si l'identifiant de type de réseau du réseau d'accès indique un réseau 3G, envoyer, par le biais du noeud SGSN, la demande d'ouverture de session au contrôleur RNC connecté au noeud SGSN; si l'identifiant de type de réseau de réseau d'accès indique un réseau 2G et un réseau 3G, envoyer, par le biais du noeud SGSN, la demande d'ouverture de session au contrôleur BSC et au contrôleur RNC connectés au noeud SGSN.

10. Procédé selon la revendication 9, comprenant en outre l'étape ci-après consistant à:
suite à la réception de la demande d'ouverture de session, déterminer, par le biais du contrôleur BSC / RNC, si le contrôleur BSC / RNC appartient au réseau d'accès indiqué par l'identifiant de type de réseau.

11. Système destiné à transmettre des données de service de multidiffusion / diffusion multimédia, MBMS, **caractérisé en ce qu'**il comporte:
un fournisseur de contenu, pour renvoyer un accusé de réception de format de session lors de la réception d'une instruction de format;
un centre de service de multidiffusion / diffusion générale, BM-SC, pour envoyer une demande d'ouverture de session à un contrôleur de station de base / contrôleur de réseau radio, BSC / RNC, par le biais d'un noeud de service GPRS de transit, GGSN, et d'un noeud de support GPRS de service, SGSN, d'un réseau fédérateur;
le noeud GGSN étant destiné à recevoir la demande d'ouverture de session en provenance du centre de service BM-SC, et à acheminer la demande d'ouverture de session au noeud SGSN;
le noeud SGSN, étant destiné à recevoir la demande d'ouverture de session en provenance du noeud GGSN, et à envoyer la demande d'ouverture de session au contrôleur BSC / RNC;
dans lequel le centre de service BM-SC est configuré:
pour déterminer une qualité de service, QoS, selon un réseau d'accès dans lequel des données de service MBMS doivent être transmises dans une session, et pour envoyer la qualité QoS déterminée au fournisseur de contenu par l'intermédiaire de l'instruction de format;
pour recevoir la qualité QoS dans une demande d'ouverture de session envoyée par le fournisseur de contenu, où la qualité QoS est utilisée pour identifier la qualité de service nécessaire à la session;
pour recevoir des informations d'une zone de service MBMS dans la demande d'ouverture de session envoyée par le fournisseur de contenu, où les informations de la zone de service MBMS sont utilisées pour identifier une zone de couverture de la session;
pour fournir des informations de zone géographique en déterminant une intersection entre des informations géographiques définies par le centre de service BM-SC selon la qualité QoS et des informations géographiques correspondant à la zone de service MBMS;
le contrôleur BSC / RNC, étant destiné à
recevoir la demande d'ouverture de session en provenance du centre de service BM-SC, construire, si la zone de couverture du contrôleur BSC / RNC chevauche la zone géographique fournie dans la demande d'ouverture de session du centre de service BM-SC, un plan de porteuse Iu entre le réseau fédérateur et le contrôleur BSC / RNC; et
affecter des ressources de transmission pour une transmission de données d'un service MBMS si la zone de couverture du contrôleur BSC / RNC chevauche la zone géographique fournie par le centre de service BM-SC.

12. Système selon la revendication 11, dans lequel le centre de service BM-SC est en outre configuré de manière à obtenir un identifiant de type de réseau d'un réseau d'accès, et à envoyer l'identifiant de type de réseau du réseau d'accès au contrôleur BSC / RNC par l'intermédiaire du noeud GGSN et du noeud SGSN du réseau fédérateur via la demande d'ouverture de session;
le contrôleur BSC / RNC est en outre configuré de manière à déterminer si le contrôleur BSC / RNC appartient au réseau d'accès indiqué par l'identifiant de type de réseau.

13. Système selon la revendication 12, dans lequel le noeud SGSN est en outre configuré de manière à déterminer l'identifiant de type de réseau du réseau d'accès dans la demande d'ouverture de session, à envoyer la demande d'ouverture de session au contrôleur BSC connecté au noeud SGSN si l'identifiant de type de réseau de réseau d'accès indique un réseau 2G; à envoyer la demande d'ouverture de session au contrôleur RNC connecté au noeud SGSN si l'identifiant de type de réseau de réseau d'accès indique un réseau 3G; et à envoyer la demande d'ouverture de session au contrôleur BSC et au contrôleur RNC connectés au noeud SGSN si l'identifiant de type de réseau de réseau d'accès indique un réseau 2G et un réseau 3G.

14. Système selon la revendication 11, comprenant en outre:
un serveur pour stocker des informations de configuration de réseau, pour recevoir les informations de l'intersection en provenance du centre de service BM-SC, et pour comparer les informations de la zone géographique à une zone de couverture d'un réseau radio pour obtenir une liste de cellules correspondant aux informations de la zone géographique; et pour renvoyer la liste de cellules au centre de service BM-SC;
le centre de service BM-SC est en outre configuré de manière à envoyer la liste de cellules correspondant aux informations de la zone géographique au contrôleur BSC / RNC;
le contrôleur BSC / RNC est en outre configuré de manière à construire le plan de porteuse Iu et à affecter des ressources de transmission selon la liste de cellules correspondant aux informations de la zone géographique et aux informations de la zone de couverture du contrôleur BSC / RNC.

15. Système selon la revendication 11, dans lequel le contrôleur BSC / RNC est en outre configuré de manière à indiquer dans un rapport un état de charge en cours de chaque cellule du contrôleur BSC / RNC au centre de service BM-SC périodiquement ou d'une manière requise par le centre de service BM-SC, et
le centre de service BM-SC est en outre configuré de manière à obtenir la capacité de transmission de la zone géographique selon l'état de charge en cours indiqué et/ou selon les informations de configuration de réseau stockées dans le centre de service BM-SC au cours de la planification de réseau.
